# EUROPEAN PATENT APPLICATION

(11) **EP 1 814 319 A1**
(43) Date of publication of application: **01.08.2007**
(21) Application number: 07001498.0
(22) Date of filing: 24.01.2007
(51) Int. Cl.: H04N 5/235, H04N 5/238

(54) **Imaging device, method for controlling imaging device, program of method for controlling imaging device, recording medium in which program of method for controlling imaging device is recorded**

(30) Priority: 31.01.2006 JP 2006022133
(71) Applicant: SONY CORPORATION, Tokyo (JP)
(72) Inventor: Yaguchi, Eiji, Shinagawa-ku Tokyo (JP)
(74) Representative: Müller - Hoffmann & Partner

(57) **Abstract**

Disclosed herein is an imaging device which includes imaging means and control means for implementing exposure control based on an imaging result acquired by the imaging means. In the imaging device, the control means includes sorting means for sorting the imaging result into an achromatic region and a chromatic region, evaluation value calculating means for calculating an evaluation value indicating brightness of a target in the imaging result based on a luminance value of the imaging result, and exposure control means for calculating a control amount so that the evaluation value becomes a control target value, to thereby implement exposure control for the imaging means. The control amount is calculated so that variation in the control amount corresponding to variation in a luminance value of the achromatic region is reduced based on a difference between the luminance value of the achromatic region and a luminance value of the chromatic region.

## Description

### CROSS REFERENCES TO RELATED APPLICATIONS

The present invention contains subject matter related to Japanese Patent Application JP 2006-022133 filed in the Japanese Patent Office on January 31, 2006, the entire contents of which being incorporated herein by reference.

### BACKGROUND OF THE INVENTION

### 1. Field of the Invention

The present invention relates to an imaging device, a method for controlling an imaging device, a program of a method for controlling an imaging device, and a recording medium in which a program of a method for controlling an imaging device is recorded. The invention can be applied to e.g. electronic still cameras. According to embodiments of the invention, exposure control is carried out so that variation in the control amount corresponding to variation in the luminance value of an achromatic region is reduced based on the difference between the luminance value of the achromatic region and that of a chromatic region. This feature allows implementation of more proper exposure control compared with existing configurations and schemes.

### 2. Description of the Related Art

In existing imaging devices such as electronic still cameras, an evaluation value for exposure control is calculated from an imaging result, and the exposure control is carried out so that this evaluation value becomes a predetermined value. As a method for calculating the evaluation value, a method of cumulatively adding the luminance values of the respective pixels of one screen has been known. One of such a method is disclosed in e.g. Japanese Patent Laid-Open No. Hei 5-292389. In the method of this patent document, the luminance value of each pixel of one screen is subjected to weighting depending on its region, and then the weighted values are cumulatively added to each other.

However, the exposure control with use of such an evaluation value involves a problem that it is hard to control the exposure properly. Specifically, if a white object having high reflectivity exists as the background or the like, a person or the like as a primary target object is imaged with insufficient brightness. In contrast, if a large number of black objects and the like having low reflectivity exist as the background or the like, a person or the like is imaged with too much brightness.

### SUMMARY OF THE INVENTION

In view of the above-described problem, there is a need for the invention to provide an imaging device, a method for controlling an imaging device, a program of a method for controlling an imaging device, and a recording medium in which a program of a method for controlling an imaging device is recorded, that each allow implementation of more proper exposure control compared with existing configurations and schemes.

In order to address the above-described problem, an embodiment of the present invention is applied to an imaging device that includes an imager configured to output an imaging result, and a controller configured to implement exposure control based on an imaging result acquired by the imager. The controller includes a sorter that sorts the imaging result into an achromatic region and a chromatic region, an evaluation value calculator that calculates an evaluation value indicating the brightness of a target in the imaging result based on the luminance value of the imaging result, and an exposure controller that calculates a control amount so that the evaluation value becomes a control target value, to thereby implement exposure control for the imager. The control amount is calculated so that variation in the control amount corresponding to variation in the luminance value of the achromatic region is reduced based on the difference between the luminance value of the achromatic region and the luminance value of the chromatic region.

Another embodiment of the invention is applied to a method for controlling an imaging device that implements exposure control based on an imaging result acquired by an imager. The method includes the steps of sorting the imaging result into an achromatic region and a chromatic region, calculating an evaluation value that indicates the brightness of a target in the imaging result based on the luminance value of the imaging result, and calculating a control amount so that the evaluation value becomes a control target value, to thereby implement exposure control for the imager. The control amount is calculated so that variation in the control amount corresponding to variation in the luminance value of the achromatic region is reduced based on the difference between the luminance value of the achromatic region and the luminance value of the chromatic region.

A further embodiment of the invention is applied to a program of a method for controlling an imaging device that controls an imager through implementation of an arithmetic processor. The program includes the steps of sorting an imaging result into an achromatic region and a chromatic region, calculating an evaluation value that indicates the brightness of a target in the imaging result based on the luminance value of the imaging result, and calculating a control amount so that the evaluation value becomes a control target value, to thereby implement exposure control for the imager. The control amount is calculated so that variation in the control amount corresponding to variation in the luminance value of the achromatic region is reduced based on the difference between the luminance value of the achromatic region and the luminance value of the chromatic region.

An even further embodiment of the invention is applied to a recording medium in which a program of a method for controlling an imaging device that controls an imager through implementation of an arithmetic processor is recorded. The program includes the steps of sorting an imaging result into an achromatic region and a chromatic region, calculating an evaluation value that indicates the brightness of a target in the imaging result based on the luminance value of the imaging result, and calculating a control amount so that the evaluation value becomes a control target value, to thereby implement exposure control for the imager. The control amount is calculated so that variation in the control amount corresponding to variation in the luminance value of the achromatic region is reduced based on the difference between the luminance value of the achromatic region and the luminance value of the chromatic region.

According to the configuration of the first embodiment, if the background is closer to white, exposure control is carried out so that the imaging result is biased toward white to a larger extent than usual. In contrast, if the background is closer to black, exposure control is carried out so that the imaging result is biased toward black to a larger extent than usual. This configuration can avoid e.g. the situation where if a white object exists as the background or the like, a person or the like as a primary target object is imaged with insufficient brightness. Furthermore, the configuration can avoid the situation where if a black object exists as the background or the like, a person or the like is imaged with too much brightness. Thus, the exposure control can be carried out more properly compared with existing configurations.

According to the schemes of the other embodiments, if the background is closer to white, exposure control is carried out so that the imaging result is biased toward white to a larger extent than usual. In contrast, if the background is closer to black, exposure control is carried out so that the imaging result is biased toward black to a larger extent than usual. These schemes can avoid e.g. the situation where if a white object exists as the background or the like, a person or the like as a primary target object is imaged with insufficient brightness. Furthermore, the schemes can avoid the situation where if a black object exists as the background or the like, a person or the like is imaged with too much brightness. Thus, the exposure control can be carried out more properly compared with existing schemes.

According to the embodiments of the invention, the situation can be avoided where if a white object exists as the background or the like, a person or the like as a primary target object is imaged with insufficient brightness. Furthermore, the situation can be avoided where if a black object exists as the background or the like, a person or the like is imaged with too much brightness. Thus, exposure control can be carried out more properly compared with existing configurations and schemes.

### BRIEF DESCRIPTION OF THE DRAWINGS

Fig. 1 is a flowchart showing the processing procedure of a main control circuit of an electronic still camera according to a first embodiment of the present invention;
Fig. 2 is a block diagram showing the electronic still camera according to the first embodiment;
Fig. 3 is a characteristic curve diagram showing the characteristic of a correction coefficient K1 obtained through the processing of Fig. 1 by the main control circuit;
Fig. 4 is a characteristic curve diagram showing the characteristic of a correction coefficient K2 obtained through the processing of Fig. 1 by the main control circuit;
Fig. 5 is a flowchart showing the processing procedure of a main control circuit of an electronic still camera according to a second embodiment of the invention;
Fig. 6 is a characteristic curve diagram showing the characteristic of a correction coefficient K1 obtained through the processing of Fig. 5 by the main control circuit;
Fig. 7 is a characteristic curve diagram showing the characteristic of a correction coefficient K2 when achromatic regions are closer to white, obtained through the processing of Fig. 5 by the main control circuit; and
Fig. 8 is a characteristic curve diagram showing the characteristic of the correction coefficient K2 when achromatic regions are closer to black, obtained through the processing of Fig. 5 by the main control circuit.

### DETAILED DESCRIPTION OF THE PREFERRED EMBODIMENTS

Embodiments of the present invention will be described in detain below with reference to the accompanying drawings.

### First Embodiment

### (1) Configuration of Embodiment

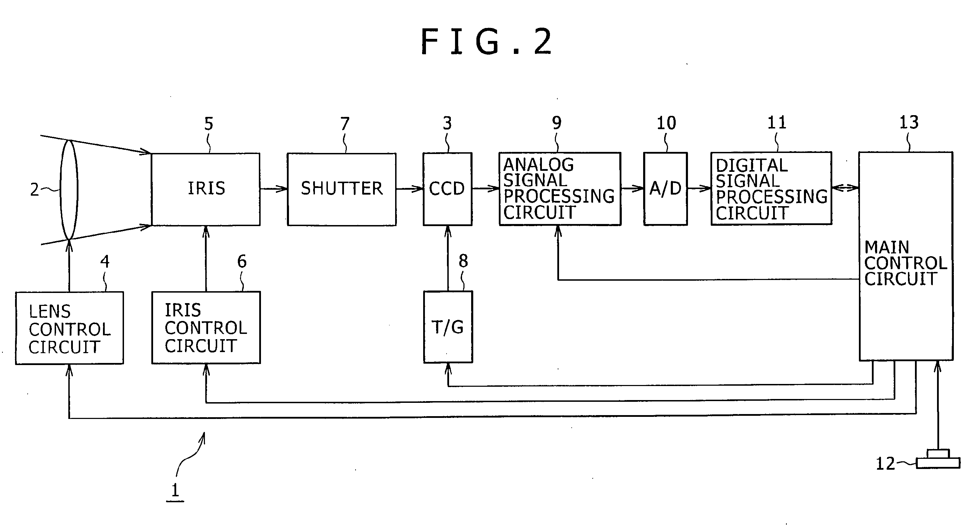

Fig. 2 is a block diagram showing an electronic still camera according to an embodiment of the invention. In an electronic still camera 1, a lens 2 focuses incident light on the imaging plane of a charge coupled device (CCD) solid-state imaging element 3, to thereby form optical images on the imaging plane. A lens control circuit 4 changes the magnification and focus of the lens 2 under control by a main control circuit 13.

An iris 5 limits the incident light that enters the imaging plane of the CCD solid-state imaging element 3 from the lens 2. An iris control circuit 6 controls the iris 5 under control by the main control circuit 13. A shutter 7 blocks the incident light that enters the imaging plane of the CCD solid-state imaging element 3 under control by the main control circuit 13.

A timing generator (TG) 8 produces and outputs various kinds of timing signals necessary for the operation of the CCD solid-state imaging element 3. The CCD solid-state imaging element 3 executes photoelectric conversion processing for optical images formed on the imaging plane and outputs the imaging results of the optical images.

An analog signal processing circuit 9 subjects the output signal from the CCD solid-state imaging element 3 to correlated double sampling and matrix arithmetic processing, and amplifies the resultant signal with a gain indicated from the main control circuit 13 to output the amplified signal. An analog-digital conversion circuit (A/D) 10 executes analog-digital conversion processing for the output signal from the analog signal processing circuit 9, and outputs the image data of the imaging result.

The image data output from the analog-digital conversion circuit 10 is input to a digital signal processing circuit 11. The digital signal processing circuit 11 subjects the input image data to gamma correction, white balance adjustment, knee processing, and so on, and outputs the resultant data. The electronic still camera 1 displays the image data output from the digital signal processing circuit 11 on a monitor device, and records the image data in a recording medium after compressing the data. The digital signal processing circuit 11 acquires information necessary for focus control, exposure control, and white balance adjustment from the image data output from the analog-digital conversion circuit 10, and outputs the acquired information to the main control circuit 13. The main control circuit 13 controls, based on the information, the operation of the lens control circuit 4, the iris control circuit 6, the shutter 7, the analog signal processing circuit 9, and the digital signal processing circuit 11 to thereby execute processing of automatic focus control, automatic exposure control, and automatic white balance adjustment.

The main control circuit 13 is a computer for controlling the operation of the electronic still camera 1, and controls the entire operation in response to operation of the respective units by a user through execution of a program recorded in a memory (not shown). In this embodiment, the program executed by the main control circuit 13 is preinstalled in the electronic still camera 1. However, instead of being preinstalled, the program may be provided with being recorded in any of various recording media such as optical disks, magnetic disks, and memory cards. Alternatively, the program may be provided through downloading via a network such as the Internet.

Upon powering-up of the camera 1 in response to operation of a power supply switch by a user, the main control circuit 13 starts its operation to initiate the operation of the respective units so that the imaging results of a moving image are acquired by the CCD solid-state imaging element 3. Furthermore, the main control circuit 13 starts processing of automatic focus control, automatic exposure control, and automatic white balance adjustment, so that the imaging results of the moving image are processed by the analog signal processing circuit 9 and the digital signal processing circuit 11 and are displayed on the monitor device. If the user half-presses a shutter button 12 in this state, the main control circuit 13 fixes the control amounts of the automatic focus control, automatic exposure control, and automatic white balance adjustment at the control amounts employed immediately before the half-pressing. If the user completely presses the shutter button 12 in this state, the main control circuit 13 controls the shutter 7 and the timing generator 8 so that the imaging result of a still image is achieved by the CCD solid-state imaging element 3. In addition, the main control circuit 13 sequentially processes the imaging result of the still image and displays the processed imaging result on the monitor device. Moreover, the main control circuit 13 records the imaging result of the still image in a recording medium in response to an instruction by the user.

In the electronic still camera 1, the automatic exposure control by the main control circuit 13 is executed as follows. Specifically, luminance data and color data of red, green and blue are detected by the digital signal processing circuit 11. Based on the detection results, the main control circuit 13 controls the iris 5, the charge storage time of the CCD solid-state imaging element 3, and the gain of the analog signal processing circuit 9. This detection is executed by averaging the relevant pixel values for each of regions defined through division of one screen. Therefore, the detection results of luminance data are the average luminance values of the respective regions.

Hence, in this embodiment, the lens 2, the lens control circuit 4, the iris 5, the iris control circuit 6, the shutter 7, the CCD solid-state imaging element 3, the timing generator 8, and the analog signal processing circuit 9 serve as an imager that acquires imaging results under exposure control by the main control circuit 13.

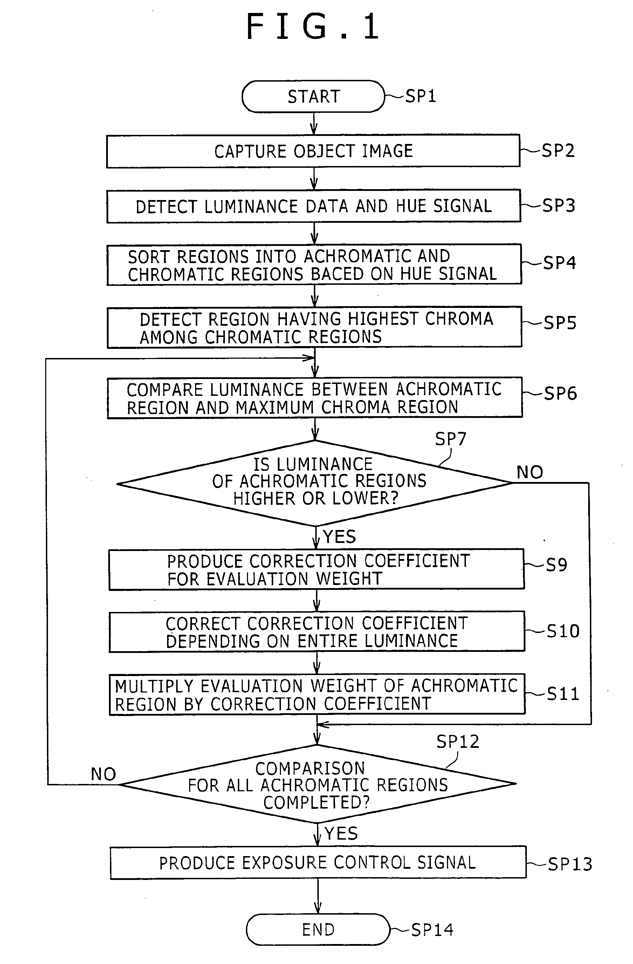

Fig. 1 is a flowchart showing the processing procedure of exposure control by the main control circuit 13. The main control circuit 13 executes the processing procedure shown in Fig. 1 for each one frame of imaging results. Upon starting this processing procedure in a step SP1, the main control circuit 13 acquires an imaging result of one frame by the CCD solid-state imaging element 3 in a step SP2.

Subsequently, in a step SP3, the main control circuit 13 detects the luminance data and the color data of red, green and blue by the digital signal processing circuit 11, and acquires the detection results. Hereinafter, a signal that represents a hue like these color data of red, green and blue will be referred to as a hue signal.

In a step SP4, the main control circuit 13 corrects the detection results of the color data acquired in the step SP3 so that the corrected detection results each have the signal level resulting from white balance adjustment, based on information necessary for the white balance adjustment acquired from the digital signal processing circuit 11. Subsequently, the main control circuit 13 determines the signal level ratio among the detection results based on a threshold value, to thereby sort the regions defined in the imaging result into achromatic regions and chromatic regions. The achromatic region is a region of black, white and gray in which the chroma is almost zero, while the chromatic region is a region other than the achromatic region.

Subsequently, in a step SP5, the main control circuit 13 detects from the chromatic regions a maximum chroma region Cmax having the highest chroma, as the region representative of the chromatic regions. For the detection of the maximum chroma region Cmax, the main control circuit 13 calculates for each region the square sum or sum of the signal levels R, G and B of the detection results of the color data of red, green and blue, respectively. The region having the largest square sum (R² + G² + B²) or sum (R + G + B) is detected as the maximum chroma region Cmax.

In a step SP6, the main control circuit 13 compares the average luminance value Cmax y of the maximum chroma region Cmax with the average luminance value (M1 y) of one of the achromatic regions (M1, M2, M3, ···). Subsequently, in a step SP7, the main control circuit 13 determines based on the comparison result whether or not the average luminance value M1 y of the achromatic region M1 is larger than the average luminance value Cmax y of the maximum chroma region Cmax, or whether or not the average luminance value M1 y of the achromatic region M1 is smaller than the average luminance value Cmax y of the maximum chroma region Cmax. Through the processing of the step SP6, the main control circuit 13 determines whether the brightness of the achromatic region M1 is closer to white or black based on the maximum chroma region Cmax. The determination as to whether the achromatic region M1 is closer to white or black may be made not based on a comparison with the average luminance of the maximum chroma region but on a comparison with the average luminance of all the chromatic regions.

If the average luminance value M1 y of the achromatic region M1 is larger than the average luminance value Cmax y of the maximum chroma region Cmax or the average luminance value M1 y of the achromatic region M1 is smaller than the average luminance value Cmax y of the maximum chroma region Cmax, i.e., if the achromatic region M1 is closer to white or black, the main control circuit 13 makes the affirmative determination (YES) in the step SP7, and thus proceeds to a step SP9.

In the step SP9, the main control circuit 13 calculates a correction coefficient K1 of the achromatic region M1 for correcting the control amount of the exposure control. In this embodiment, the evaluation value indicating the brightness of the imaging target is calculated through weighted addition of the average luminance values of the respective regions with weighting factors Mn w. In the step SP9, the correction coefficient K1 for correcting the weighting factor Mn w is calculated.

If the achromatic region M1 is closer to white, the main control circuit 13 calculates such the correction coefficient K1 that the imaging result is biased toward white to a larger extent compared with the case where the average luminance value M1 y of the achromatic region M1 is equal to the average luminance value Cmax y of the maximum chroma region Cmax. In contrast, if the achromatic region M1 is closer to black, the main control circuit 13 calculates such the correction coefficient K1 that the imaging result is biased toward black to a larger extent compared with the case where the average luminance value M1 y of the achromatic region M1 is equal to the average luminance value Cmax y of the maximum chroma region Cmax. Furthermore, the correction coefficient K1 is calculated so that a higher degree of being closer to white or black of the achromatic region M1 leads to a larger extent of the bias toward white or black in the imaging result.

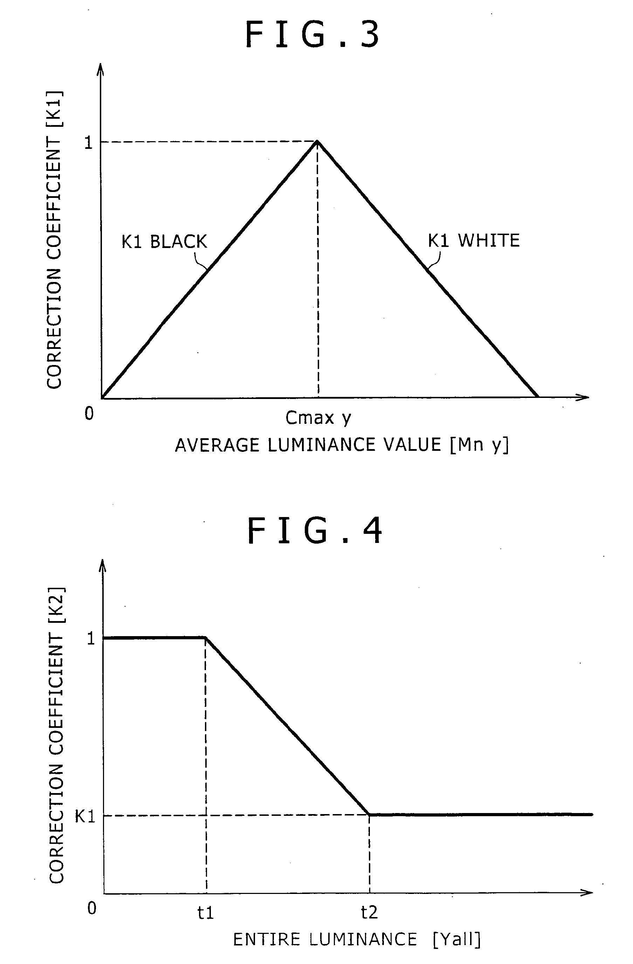

Specifically, as shown in Fig. 3, if the achromatic region M1 is closer to white, the main control circuit 13 employs, as a correction coefficient K1 white, the value Cmax y/M1 y obtained by dividing the average luminance value Cmax y of the maximum chroma region Cmax by the average luminance value M1 y of the achromatic region M1. In contrast, if the achromatic region M1 is closer to black, the main control circuit 13 employs, as a correction coefficient K1 black, the value M1 y/Cmax y obtained by dividing the average luminance value M1 y of the achromatic region M1 by the average luminance value Cmax y of the maximum chroma region Cmax. According to such a manner of setting the correction coefficient K1, the main control circuit 13 produces the correction coefficients K1 white and K1 black that decrease from 1 as the difference between the average luminance value Cmax y of the maximum chroma region Cmax and the average luminance value M1 y of the achromatic region M1 becomes larger.

In a step SP10, the main control circuit 13 corrects the correction coefficient K1 produced in the step SP9 to thereby produce a correction coefficient K2 for correcting the weighting factor Mn w. To produce the correction coefficient K2, the main control circuit 13 averages the average luminance values of one screen detected by the digital signal processing circuit 11 to thereby detect the average luminance value Yall of one screen. Furthermore, the main control circuit 13 determines the average luminance value Yall of one screen based on predetermined threshold values t1 and t2. As shown in Fig. 4, if the average luminance value Yall is larger than the threshold value t2, the main control circuit 13 sets the correction coefficient K2 to the value of the correction coefficient K1. If the average luminance value Yall is smaller than the threshold value t1, the main control circuit 13 sets the correction coefficient K2 to 1. If the average luminance value Yall is in the range from the threshold value t1 to the threshold value t2, the correction coefficient K2 is set to the value that varies in the range from 1 to the value of the correction coefficient K1 in inverse proportion to the average luminance value Yall. The threshold values t1 and t2 serve as the determination bases for an extremely dark screen and an extremely bright screen, respectively. The correction coefficient K2 may be produced by using the average luminance value Cmax y of the maximum chroma region instead of the average luminance value Yall.

In a subsequent step SP11, the main control circuit 13 multiplies the weighting factor Mn w of the relevant achromatic region by the correction coefficient K2 to thereby correct the value of the weighting factor Mn w, followed by a step SP12. Employed as the weighting factor Mn w is the value that is defined in advance depending on the photometric mode such as weighted metering or multizone metering.

If the average luminance value M1 y of the achromatic region M1 is equal to the average luminance value Cmax y of the maximum chroma region Cmax, i.e., if the achromatic region M1 is neither closer to white nor closer to black, the main control circuit 13 makes the negative determination (NO) in the step SP7, and thus proceeds directly to a step SP12 from the step SP7. Hence, the main control circuit 13 ends the processing without correcting the weighting factor Mn w, which is defined in advance and used to detect the evaluation value.

In the step SP12, the main control circuit 13 determines whether or not processing for all the achromatic regions (M1, M2, M3, ···) has been completed. If the negative determination is made, the processing sequence returns to the step SP6, so that the next achromatic region (M2, M3, ···) is processed.

The main control circuit 13 executes the processing procedure SP6-SP7-SP9-SP10-SP11-SP12, or the processing procedure SP6-SP7-SP12 for each of the achromatic regions in the imaging result. In each processing procedure, if the average luminance value Yall of one screen is larger than the threshold value t1, the main control circuit 13 decreases the weighting factor Mn w of the achromatic region (M1, M2, M3, ···) by the value dependent upon the difference between the average luminance value Cmax y of the maximum chroma region Cmax and the average luminance value M1 y.

Upon completing the processing for all the achromatic regions, the main control circuit 13 makes the affirmative determination in the step SP12, and thus proceeds to a step SP13 from the step SP12. In the step SP13, the main control circuit 13 subjects the average luminance values of the respective regions to weighted addition with the weighting factors Mn w to thereby calculate the evaluation value indicating the brightness of the imaging result. Furthermore, the main control circuit 13 calculates the control amount so that the evaluation value becomes the control target value. Subsequently, the main control circuit 13 controls the iris 5, the charge storage time of the CCD solid-state imaging element 3, and the gain of the analog signal processing circuit 9 based on the calculated control amount, and then proceeds to a step SP14 to end the processing procedure.

In this embodiment, through the execution of the processing procedure shown in Fig. 1, the main control circuit 13 calculates the control amount by setting the weighting factors Mn w so that variation in the control amount corresponding to variation in the luminance value of an achromatic region is reduced based on the difference between the luminance value of the achromatic region and that of a chromatic region, to thereby execute processing of exposure control.

### (2) Operation of Embodiment

According to the above-described configuration, in the electronic still camera 1 (Fig. 2), optical images formed on the imaging plane of the CCD solid-state imaging element 3 are subjected to photoelectric conversion, so that the imaging results of a moving image are obtained. The imaging results of the moving image are sequentially processed by the analog signal processing circuit 9, the analog-digital conversion circuit 10, and the digital signal processing circuit 11, followed by being displayed on a monitor device. Furthermore, the digital signal processing circuit 11 acquires information necessary for focus control, exposure control, and white balance adjustment, so that processing of automatic focus control, automatic exposure control, and automatic white balance adjustment is executed under control by the main control circuit 13 based on the information.

In the electronic still camera 1, if a user half-presses the shutter button 12 in this state, the control amounts of the focus control, exposure control, and white balance adjustment are fixed at the control amounts employed immediately before the half-pressing. If the user completely presses the shutter button 12 in this state, the imaging result of a still image instead of the moving image is acquired by the CCD solid-state imaging element 3. The imaging result of the still image is sequentially processed by the analog signal processing circuit 9, the analog-digital conversion circuit 10, and the digital signal processing circuit 11, followed by being recorded in a recording medium.

Therefore, in this electronic still camera 1, processing of exposure control and so on is executed to obtain the optimal imaging condition when imaging results are being checked through viewing of a moving image displayed on the monitor device. Under this optimal imaging condition, the imaging result of a still image is acquired and recorded in a recording medium.

In the electronic still camera 1, when the moving image is being captured, the average luminance value is detected by the digital signal processing circuit 11 for each of the regions arising from division of the imaging result. Furthermore, the respective average luminance values are weighted by the weighting factors Mn w dependent upon the photometric mode and added to each other so that the evaluation value indicating the brightness of the imaging target is calculated. In the electronic still camera 1, the control amount is set so that the evaluation value becomes the control target value. Furthermore, the iris 5, the charge storage time of the CCD solid-state imaging element 3, and the gain of the analog signal processing circuit 9 are controlled based on this control amount, and thereby processing of exposure control is executed, which allows a desired target object to be imaged with proper brightness.

However, in an actual imaging scene, a white object having high reflectivity often exists as the background or the like. Furthermore, a large number of black objects and the like having low reflectivity exist as the background or the like in some cases. If the evaluation value is calculated by merely implementing weighted addition of the average luminance values of the respective regions with weighting factors, the calculated evaluation value varies depending on the brightness of the background. Therefore, the following problem is caused unless any countermeasure is provided. Specifically, if a white object having high reflectivity exists as the background or the like, a primary target object is imaged with insufficient brightness. In contrast, if a black object having low reflectivity exists as the background or the like, a primary target object is imaged with too much brightness.

To address this, in the electronic still camera 1 (Fig. 2), the color data of red, green and blue are averaged by the digital signal processing circuit 11 for each region. Subsequently, the ratio of the average values is determined by the main control circuit 13, so that the respective regions are sorted into chromatic regions and achromatic regions. In addition, the luminance value of each achromatic region is determined based on the luminance value of the region representative of the chromatic regions, and exposure control is implemented by calculating the control amount so that variation in the control amount corresponding to variation in the luminance value of an achromatic region is reduced based on the difference between the luminance value of the achromatic region and that of the chromatic region.

Specifically, in this electronic still camera 1, the correction coefficient K1 is produced that decreases from 1 as the difference between the luminance value of the achromatic region and that of the region representative of the chromatic regions becomes larger (Fig. 3). Moreover, the correction coefficient K2 is produced that decreases from 1 toward the value of the correction coefficient K1 as the luminance Yall of the entire screen becomes higher (Fig. 4). The weighting factor Mn w is corrected by the correction coefficient K2 to calculate the evaluation value.

As a result, in this electronic still camera 1, if the achromatic region M1 is closer to white, exposure control is implemented so that the imaging result is biased toward white to a larger extent compared with the case where the average luminance values of the respective regions are merely subjected to weighted addition with weighting factors to calculate the evaluation value. In contrast, if the achromatic region M1 is closer to black, exposure control is implemented so that the imaging result is biased toward black to a larger extent compared with the case where the average luminance values of the respective regions are merely subjected to weighted addition with weighting factors to calculate the evaluation value. Accordingly, the electronic still camera 1 can image a primary target object with proper brightness with preventing the primary object from being imaged with too much brightness or insufficient brightness depending on the background and so on.

More specifically, in this electronic still camera 1, the weighting factors are corrected by the correction coefficients as follows, except when the imaging result is extremely dark. Specifically, if a white object having high reflectivity exists as the background or the like, the weighting factors are corrected to prevent the evaluation value from being significantly increased due to the white object. In contrast, if a black object having low reflectivity exists as the background or the like, the weighting factors are corrected to prevent the evaluation value from being significantly lowered due to the black object. Such correction allows a primary target object to be imaged with proper brightness.

In the electronic still camera 1, the weighting factor Mn w is corrected by producing the correction coefficient K1 that decreases from 1 as the difference between the luminance value of the achromatic region and that of the region representative of the chromatic regions becomes larger. Furthermore, the correction coefficient K2 is produced that decreases from 1 toward the value of the correction coefficient K1 as the luminance Yall of the entire screen becomes higher. The weighting factor Mn w is corrected by the correction coefficient K2 to calculate the evaluation value. According to such setting of the correction coefficients K1 and K2, if the luminance Yall of the entire screen is too low, the evaluation value is calculated and processing of exposure control is executed without correcting the weighting factor Mn w.

If the luminance level is low, the pixel values of the respective color data are also small. Therefore, in sorting of regions into achromatic and chromatic regions based on a determination of the ratio of the pixel values, some regions are possibly sorted erroneously. To address this, in this electronic still camera 1, the evaluation value is calculated without correcting the weighting factor Mn w if the luminance Yall of the entire screen is low. This can prevent improper exposure control due to the erroneous sorting of regions into chromatic and achromatic regions. Specifically, due to such setting of the correction coefficient K2 in the electronic still camera 1, if the luminance value of the imaging result is smaller than a predetermined value, a relationship between variation in the control amount and variation in the luminance value of an achromatic region does not change irrespective of the difference between the luminance value of the achromatic region and that of a chromatic region. Thus, erroneous exposure control can be prevented.

Furthermore, in the electronic still camera 1, as the luminance value of the region representative of chromatic regions, the average luminance value Cmax y of the maximum chroma region Cmax that has the highest chroma among the chromatic regions is employed. As a result, the electronic still camera 1 is allowed to effectively avoid a so-called white saturation (blown highlights) state, in which a high-luminance part is saturated at the upper limit of the dynamic range of the imaging element so as to be imaged as a white part when a white object exists as the background of the high-luminance chromatic target object.

### (3) Advantageous Effects of Embodiment

According to the above-described configuration, exposure control is carried out so that variation in the control amount corresponding to variation in the luminance value of an achromatic region is reduced based on the difference between the luminance value of the achromatic region and that of a chromatic region. This feature allows implementation of more proper exposure control compared with existing configurations and schemes.

More specifically, weighting factors used to calculate an evaluation value are defined depending on the difference between the luminance value of an achromatic region and that of a chromatic region. Thereby, exposure control is carried out so that variation in the control amount corresponding to variation in the luminance value of an achromatic region is reduced based on the difference between the luminance value of the achromatic region and that of a chromatic region. This processing for the weighting factors allows implementation of more proper exposure control compared with existing configurations and schemes.

Furthermore, the setting is made so that, if the luminance value of the imaging result is smaller than a predetermined value, a relationship between variation in the control amount and variation in the luminance value of an achromatic region does not change irrespective of the difference between the luminance value of the achromatic region and that of a chromatic region. Thus, erroneous exposure control can be prevented.

In addition, the maximum chroma region that has the highest chroma among chromatic regions is employed as the region representative of the chromatic regions. This can effectively avoid a so-called white saturation state.

### Second Embodiment

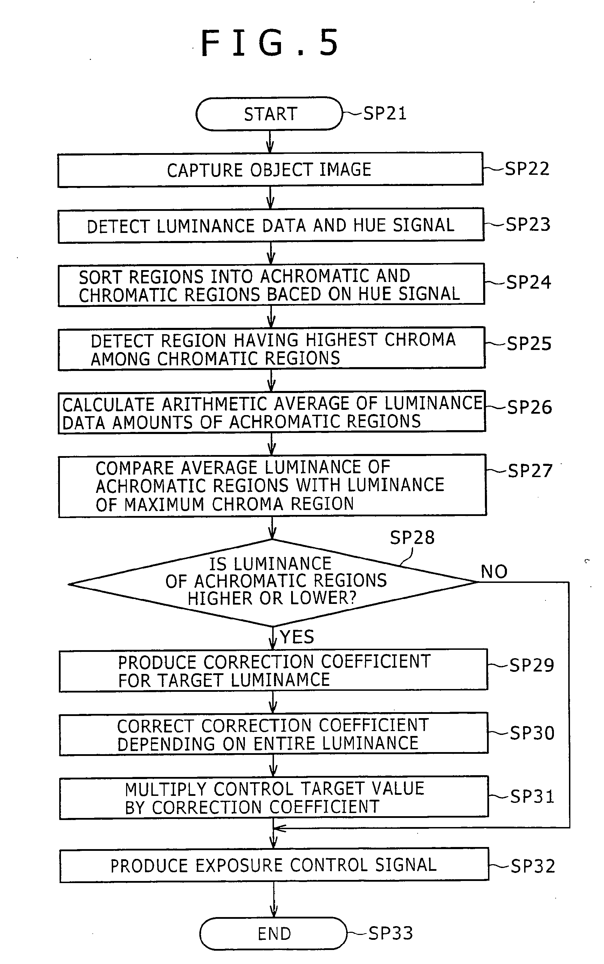

Fig. 5 is a flowchart showing, based on a comparison with Fig. 1, the processing procedure of a main control circuit applied to an electronic still camera according to a second embodiment of the invention. The electronic still camera of this embodiment has the same configuration as that of the above-described electronic still camera 1 of the first embodiment, except that the processing procedure of the main control circuit is different. Therefore, in the following description, the configuration of Fig. 2 is used and overlapping descriptions are omitted.

A main control circuit 13 executes the processing procedure shown in Fig. 5 for each one frame. Specifically, upon starting this processing procedure in a step SP21, the main control circuit 13 acquires an imaging result of one frame by a CCD solid-state imaging element 3 in a step SP22. Subsequently, in a step SP23, the main control circuit 13 detects the luminance data and the color data of red, green and blue by a digital signal processing circuit 11, and acquires the detection results. In a subsequent step SP24, the main control circuit 13 corrects the detection results so that the corrected detection results each have the signal level resulting from white balance adjustment. Furthermore, the main control circuit 13 determines the signal level ratio among the color data based on a threshold value, to thereby sort the regions defined in the imaging result into chromatic regions and achromatic region. Subsequently, in a step SP25, the main control circuit 13 detects from the chromatic regions a maximum chroma region Cmax having the highest chroma, as the region representative of the chromatic regions.

In a subsequent step SP26, the main control circuit 13 calculates the arithmetic average M y ave of the average luminance values (M1 y, M2 y, M3 y, ···) of the regions sorted into the achromatic regions (M1, M2, M3, ···). Subsequently, in a step SP27, the main control circuit 13 compares the arithmetic average M y ave with the average luminance value Cmax y of the maximum chroma region Cmax.

In a subsequent step SP28, the main control circuit 13 determines based on the comparison result whether or not the arithmetic average M y ave is larger than the average luminance value Cmax y of the maximum chroma region Cmax by a predetermined value or more, or whether or not the arithmetic average M y ave is smaller than the average luminance value Cmax y of the maximum chroma region Cmax by a predetermined value or more. Through the processing of the step SP28, the main control circuit 13 determines whether the brightness of the entire achromatic regions is closer to white or black based on the maximum chroma region Cmax. The determination as to whether the achromatic region M1 is closer to white or black may be made not based on a comparison with the average luminance of the maximum chroma region but on a comparison with the average luminance of all the chromatic regions.

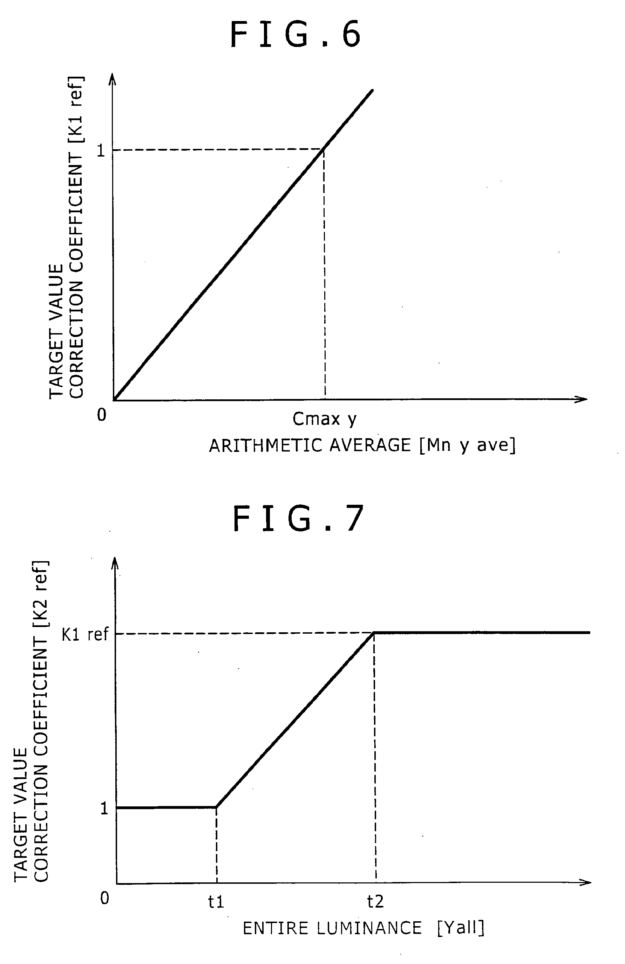

If the arithmetic average M y ave is different from the average luminance value Cmax y of the maximum chroma region Cmax, the processing sequence proceeds from the step SP28 to a step SP29, where the main control circuit 13 executes processing of producing a coefficient for correcting the target luminance. In this processing, the main control circuit 13 produces a correction coefficient K1 ref by dividing the arithmetic average M y ave by the average luminance value Cmax y of the maximum chroma region Cmax. As shown in Fig. 6, the value of the correction coefficient K1 ref increases as the arithmetic average M y ave increases, and the value is 1 when the arithmetic average M y ave is equal to the average luminance value Cmax y of the maximum chroma region Cmax.

In a subsequent step SP30, the main control circuit 13 corrects the correction coefficient K1 ref produced in the step SP29, to thereby produce a correction coefficient K2 ref for correcting the control target value. In the step SP30, the main control circuit 13 detects the average luminance value Yall of one screen, and determines the average luminance value Yall of one screen based on threshold values t1 and t2. Furthermore, the main control circuit 13 determines the correction coefficient K1 ref. If the correction coefficient K1 ref is larger than 1, i.e., if the luminance of the achromatic regions is higher than that of the chromatic region, the main control circuit 13 sets the correction coefficient K2 ref as follows. Specifically, as shown in Fig. 7, if the average luminance value Yall is larger than the threshold value t2, the main control circuit 13 sets the correction coefficient K2 ref to the value of the correction coefficient K1 ref. If the average luminance value Yall is smaller than the threshold value t1, the correction coefficient K2 ref is set to 1. If the average luminance value Yall is in the range from the threshold value t1 to the threshold value t2, the correction coefficient K2 ref is set to the value that increases from 1 toward the value of the correction coefficient K1 ref in proportion to the average luminance value Yall.

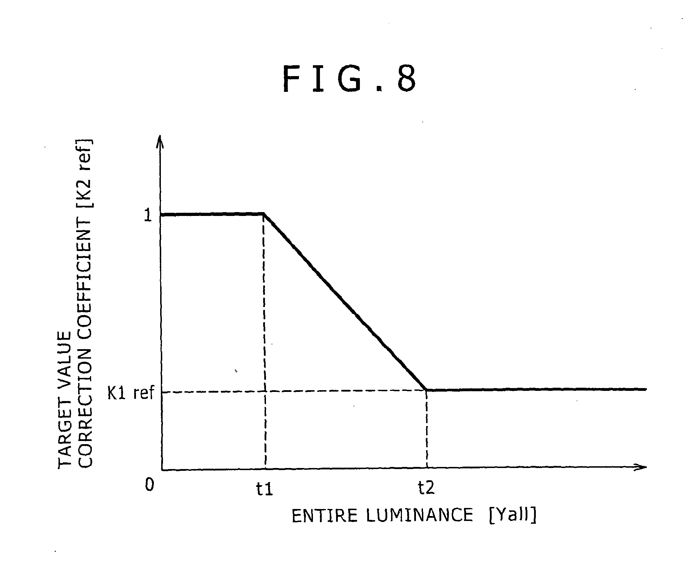

In contrast, if the correction coefficient K1 ref is smaller than 1, i.e., if the luminance of the achromatic regions is lower than that of the chromatic region, the main control circuit 13 sets the correction coefficient K2 ref as follows. Specifically, as shown in Fig. 8, if the average luminance value Yall is larger than the threshold value t2, the main control circuit 13 sets the correction coefficient K2 ref to the value of the correction coefficient K1 ref. If the average luminance value Yall is smaller than the threshold value t1, the correction coefficient K2 ref is set to 1. If the average luminance value Yall is in the range from the threshold value t1 to the threshold value t2, the correction coefficient K2 ref is set to the value that decreases from 1 toward the value of the correction coefficient K1 ref in proportion to the average luminance value Yall. Similarly to the first embodiment, the correction coefficient K2 ref may be produced by using the average luminance value Cmax y of the maximum chroma region instead of the average luminance value Yall.

In a subsequent step SP31, the main control circuit 13 multiplies the control target value Ref of the evaluation value by the correction coefficient K2 ref. Thereby, the main control circuit 13 corrects the control target value Ref of exposure control so that the imaging result is biased toward white if the achromatic regions are closer to white, while the imaging result is biased toward black if the achromatic regions are closer to black.

Subsequently, in a step SP32, the main control circuit 13 subjects the average luminance values of the respective regions to weighted addition with weighting factors Mn w to thereby calculate the evaluation value indicating the brightness of the imaging result. Furthermore, the main control circuit 13 controls the iris 5, the charge storage time of the CCD solid-state imaging element 3, and the gain of the analog signal processing circuit 9 so that the evaluation value becomes the control target value Ref calculated in the step SP31, and then proceeds to a step SP33 to end the processing procedure.

Through the execution of the processing procedure of Fig. 5, the main control circuit 13 corrects the control target value depending on the luminance value of achromatic regions in relation to that of a chromatic region, to thereby implement exposure control so that variation in the control amount corresponding to variation in the luminance value of the achromatic regions is reduced based on the difference between the luminance value of the achromatic regions and that of the chromatic region.

According to the second embodiment, exposure control is implemented based on the average luminance of the entire achromatic regions so that the imaging result is biased toward white if the achromatic regions are closer to white while the imaging result is biased toward black if the achromatic regions are closer to black. This configuration can also offer the same advantages as those by the first embodiment.

Furthermore, the exposure control based on the luminance value of the achromatic regions is executed through correction of the control target value of the exposure control. This can also offer the same advantages as those by the first embodiment.

### Third Embodiment

In the above-described first embodiment, the weighting factors of achromatic regions are decreased on each region basis. However, the present invention is not limited thereto, but the weighting factors of chromatic regions may be increased. Specifically, if the average Mn y sum of the average luminance values of achromatic regions Mn is larger than the luminance value Cmax y of the region representative of chromatic regions, the average Mn y sum is divided by the luminance value Cmax y of the representative region to calculate a correction coefficient Mn y sum/Cmax y, and the weighting factor of a chromatic region is multiplied by the correction coefficient Mn y sum/Cmax y. In contrast, if the average Mn y sum of the average luminance values of achromatic regions Mn is smaller than the luminance value Cmax y of the region representative of chromatic regions, the luminance value Cmax y of the representative region is divided by the average Mn y sum to calculate a correction coefficient Cmax y/Mn y sum, and the weighting factor of a chromatic region is multiplied by the correction coefficient Cmax y/Mn y.

In the above-described first embodiment, the weighting factors of achromatic regions are decreased on each region basis. However, the present invention is not limited thereto, but the average luminance values of achromatic regions may be decreased, or alternatively the average luminance values of chromatic regions may be increased. Specifically, in the case of decreasing the average luminance value of an achromatic region, the luminance value of the relevant region is decreased to the average (Cmax y + Mn y)/2 between the luminance value Cmax y of the region representative of chromatic regions and the average luminance value Mn y of the achromatic region.

In the first embodiment, the correction coefficient K2 dependent upon the entire luminance value as a parameter is produced based on the correction coefficient K1 that is produced from the luminance value Cmax y of a chromatic region and the luminance value of an achromatic region as described above with Figs. 3 and 4. That is, the characteristic of the correction coefficient K1 is switched between when the achromatic region is closer to white and when it is closer to black. However, the present invention is not limited thereto, but the characteristic of the correction coefficient K2 may be switched between when the achromatic region is closer to white and when it is closer to black. Furthermore, in the configuration of the second embodiment, the characteristic of the correction coefficient K1 instead of that of the correction coefficient K2 may be switched between when an achromatic region is closer to white and when it is closer to black.

In the second embodiment, the control target value is corrected by using the average luminance value of achromatic regions in one screen. However, the invention is not limited thereto, but the evaluation value itself may be corrected.

In the above-described embodiments, weighting factors are switched depending on the photometric mode. However, the invention is not limited thereto but can be widely applied also to configurations in which the weighting factors of all regions are 1, i.e., configurations in which the evaluation value is calculated by merely adding luminance values to each other.

In the above-described embodiments, color data of red, green and blue are used as hue signals. However, the invention is not limited thereto but can be widely applied also to configurations in which color data of the complementary colors are used.

In the above-described embodiments, the main control circuit processes detection results obtained through detection by a digital signal processing circuit to thereby implement exposure control. However, the invention is not limited thereto, but the detection processing of the digital signal processing circuit may be executed by the main control circuit and the series of processing may be executed by an arithmetic processor.

In the above-described embodiments, the iris, the charge storage time of the CCD solid-state imaging element, and the gain of the analog signal processing circuit are defined as the control targets for exposure control. However, the invention is not limited thereto but can be widely applied to configurations in which various control targets are controlled, such as a configuration in which one or a plurality of these control targets are selectively controlled.

The above-described embodiments relate to an electronic still camera. However, the invention is not limited thereto but can be widely applied to other various imaging devices such as video cameras.

The present invention relates to an imaging device, a method for controlling an imaging device, a program of a method for controlling an imaging device, and a recording medium in which a program of a method for controlling an imaging device is recorded, and can be applied to e.g. electronic still cameras.

It should be understood by those skilled in the art that various modifications, combinations, subcombinations and alterations may occur depending on design requirements and other factor in so far as they are within the scope of the appended claims or the equivalents thereof.

## Claims

1. An imaging device comprising:
imaging means for outputting an imaging result; and
control means for implementing exposure control based on an imaging result acquired by the imaging means;
wherein
the control means includes
sorting means for sorting the imaging result into an achromatic region and a chromatic region,
evaluation value calculating means for calculating an evaluation value indicating brightness of a target in the imaging result based on a luminance value of the imaging result, and
exposure control means for calculating a control amount so that the evaluation value becomes a control target value, to thereby implement exposure control for the imaging means, and
the control amount is calculated so that variation in the control amount corresponding to variation in a luminance value of the achromatic region is reduced based on a difference between the luminance value of the achromatic region and a luminance value of the chromatic region.

2. A method for controlling an imaging device that implements exposure control based on an imaging result acquired by imaging means, the method comprising the steps of:
sorting the imaging result into an achromatic region and a chromatic region;
calculating an evaluation value that indicates brightness of a target in the imaging result based on a luminance value of the imaging result; and
calculating a control amount so that the evaluation value becomes a control target value, to thereby implement exposure control for the imaging means;
wherein the control amount is calculated so that variation in the control amount corresponding to variation in a luminance value of the achromatic region is reduced based on a difference between the luminance value of the achromatic region and a luminance value of the chromatic region.

3. The method for controlling an imaging device according to claim 2, the calculating an evaluation value step including the sub-steps of:
weighting a luminance value of each region in the imaging result by a weighting factor and adding the weighted luminance values to each other to thereby detect the evaluation value; and
setting the weighting factor depending on the luminance value of the achromatic region in relation to the luminance value of the chromatic region;
wherein the control amount is calculated through the setting of the weighting factor so that variation in the control amount corresponding to variation in the luminance value of the achromatic region is reduced based on the difference between the luminance value of the achromatic region and the luminance value of the chromatic region.

4. The method for controlling an imaging device according to claim 2, the calculating an evaluation value step including the sub-steps of:
adding luminance values of regions in the imaging result to each other to thereby detect the evaluation value; and
correcting the luminance value to be added in the adding step depending on the luminance value of the achromatic region in relation to the luminance value of the chromatic region;
wherein the control amount is calculated through the correction of the luminance value so that variation in the control amount corresponding to variation in the luminance value of the achromatic region is reduced based on the difference between the luminance value of the achromatic region and the luminance value of the chromatic region.

5. The method for controlling an imaging device according to claim 2, further comprising the step of
correcting the evaluation value depending on the luminance value of the achromatic region in relation to the luminance value of the chromatic region,
wherein the control amount is calculated through the correction of the evaluation value so that variation in the control amount corresponding to variation in the luminance value of the achromatic region is reduced based on the difference between the luminance value of the achromatic region and the luminance value of the chromatic region.

6. The method for controlling an imaging device according to claim 2, further comprising the step of:
correcting the control target value depending on the luminance value of the achromatic region in relation to the luminance value of the chromatic region,
wherein the control amount is calculated through the correction of the control target value so that variation in the control amount corresponding to variation in the luminance value of the achromatic region is reduced based on the difference between the luminance value of the achromatic region and the luminance value of the chromatic region.

7. The method for controlling an imaging device according to claim 2, wherein
if the luminance value of the imaging result is equal to or smaller than a predetermined value, the control amount is calculated so that the relationship between the variation in the control amount and the corresponding variation in the luminance value of the achromatic region does not change irrespective of the difference between the luminance value of the achromatic and the luminance value of the chromatic region.

8. A program of a method for controlling an imaging device that controls imaging means through implementation of arithmetic processing means, the program comprising the steps of:
sorting an imaging result into an achromatic region and a chromatic region;
calculating an evaluation value that indicates brightness of a target in the imaging result based on a luminance value of the imaging result; and
calculating a control amount so that the evaluation value becomes a control target value, to thereby implement exposure control for the imager,
wherein the control amount is calculated so that variation in the control amount corresponding to variation in a luminance value of the achromatic region is reduced based on a difference between the luminance value of the achromatic region and a luminance value of the chromatic region.

9. A recording medium in which a program of a method for controlling an imaging device that controls imaging means through implementation of arithmetic processing means is recorded, the program comprising the steps of:
sorting an imaging result into an achromatic region and a chromatic region;
calculating an evaluation value that indicates brightness of a target in the imaging result based on a luminance value of the imaging result; and
calculating a control amount so that the evaluation value becomes a control target value, to thereby implement exposure control for the imaging means,
wherein the control amount is calculated so that variation in the control amount corresponding to variation in a luminance value of the achromatic region is reduced based on a difference between the luminance value of the achromatic region and a luminance value of the chromatic region.

10. An imaging device comprising:
an imager configured to output an imaging result; and
a controller configured to implement exposure control based on an imaging result acquired by the imager; wherein
the controller includes
a sorter configured to sort the imaging result into an achromatic region and a chromatic region,
an evaluation value calculator configured to calculate an evaluation value indicating brightness of a target in the imaging result based on a luminance value of the imaging result, and
an exposure controller configured to calculate a control amount so that the evaluation value becomes a control target value, to thereby implement exposure control for the imager, and
the control amount is calculated so that variation in the control amount corresponding to variation in a luminance value of the achromatic region is reduced based on a difference between the luminance value of the achromatic region and a luminance value of the chromatic region.
